# EUROPEAN PATENT APPLICATION

(11) **EP 4 585 563 A1**
(43) Date of publication of application: **16.07.2025**
(21) Application number: 23863072.7
(22) Date of filing: 31.08.2023
(51) Int. Cl.: C01F 11/18, B01D 46/02, B01D 53/14, B01D 53/18, B01D 53/62, B01D 53/78, C02F 11/00

(54) **CARBON DIOXIDE UTILIZING SYSTEM, AND DEVICE AND METHOD FOR PRODUCING CALCIUM CARBONATE**

(30) Priority: 09.09.2022 JP 2022143446
(71) Applicant: Sumitomo Osaka Cement Co., Ltd., Tokyo, 105-8641 (JP)
(72) Inventor: TABUCHI, Ryosuke, Tokyo 105-8641 (JP); KAMIGOUCHI, Takashi, Tokyo 105-8641 (JP); KANAI, Kensuke, Tokyo 105-8641 (JP); KANO, Kazuhiro, Tokyo 105-8641 (JP); KOZAKAI, Noriyuki, Tokyo 105-8641 (JP)
(74) Representative: Müller-Boré & Partner Patentanwälte PartG mbB
(86) International application number: PCT/JP2023/031680
(87) International publication number: WO 2024/053534

(57) **Abstract**

Provided is a carbon dioxide utilizing system in which, while utilizing carbon dioxide in exhaust gas, the amount of waste of fresh concrete sludge typically discarded as a waste can be reduced, and calcium carbonate can be efficiently reutilized. The carbon dioxide utilizing system includes: a flue through which exhaust gas containing carbon dioxide passes; a spray nozzle that supplies fresh concrete sludge water to the flue; and a dust collection device that recovers a reaction product containing calcium carbonate produced by reaction of the carbon dioxide in the exhaust gas and the fresh concrete sludge water.

## Description

### Technical Field

The present disclosure relates to a carbon dioxide utilizing system and a device and a method for producing calcium carbonate.

### Background Art

Recently, the interest in global warming has increased, and a reduction in emissions of carbon dioxide to the atmosphere has been required. In various facilities such as a power plant, an incinerator, a cement factory, an iron mill, or a plant facility, a method for reducing emissions of exhaust gas containing carbon dioxide that is produced by an operation to the atmosphere and recovering carbon dioxide is considered. In particular, a reduction in emissions of carbon dioxide in the cement factory is regarded as an urgent issue.

For example, as a method for treating sludge water, Patent Literature No. 1 discloses a method for recovering sludge water by blowing carbon dioxide to sludge water to cause a reaction with a hydration product in the sludge water to occur such that calcium carbonate is produced. Patent Literature No. 1 also discloses that it is preferable that carbon dioxide is obtained using exhaust gas containing carbon dioxide and the like during calcination of carbon dioxide as an industrial product, air, and a cement clinker from the viewpoint of suppressing emission of carbon dioxide or the like to the atmosphere and effectively utilizing carbon dioxide or the like.

In addition, as a method of producing a carbonate by using carbon dioxide gas in exhaust gas as a raw material, Patent Literature No. 2 discloses a method including: forming a mist of an alkaline aqueous solution such as a caustic soda aqueous solution; causing the mist to absorb carbon dioxide gas in exhaust gas; forming a mist containing a carbonate (sodium carbonate) produced by reaction of caustic soda and carbon dioxide gas; and separating the mist containing the carbonate from the exhaust gas. Further, Patent Literature No. 2 also discloses a method of producing calcium carbonate by reaction of sodium carbonate and calcium hydroxide. This way, currently, for example, various studies on a method capable of recovering carbon dioxide (carbon dioxide gas) in exhaust gas have progressed.

### Citation List

### Patent Literature

[Patent Literature No. 1] Japanese Laid-open Patent Publication No. 2020-163821
[Patent Literature No. 2] Pamphlet of International Publication No. WO2022-014554

### Summary of Invention

### Technical Problem

The present invention has been made under these circumstances, and an object thereof is to provide a carbon dioxide utilizing system and a device and a method for producing calcium carbonate, in which, while utilizing carbon dioxide in exhaust gas, the amount of waste of fresh concrete sludge typically discarded as a waste can be reduced, and calcium carbonate can be efficiently reutilized.

### Solution to Problem

In order to solve the above-described problems, the present invention provides the following carbon dioxide utilizing system.
1. A carbon dioxide utilizing system including:
   a flue through which exhaust gas containing carbon dioxide passes;
   a spray nozzle that supplies fresh concrete sludge water to the flue; and
   a dust collection device that recovers a reaction product containing calcium carbonate produced by reaction of the carbon dioxide in the exhaust gas and the fresh concrete sludge water.
      Further, the present invention provides the following carbon dioxide utilizing system as a preferable embodiment.
2. The carbon dioxide utilizing system according to 1,
   in which a temperature of the exhaust gas is 50°C or higher and 250°C or lower.
3. The carbon dioxide utilizing system according to 1 or 2,
   in which the dust collection device is a bag filter.
4. The carbon dioxide utilizing system according to any one of 1 to 3,
   in which an amount of the fresh concrete sludge water supplied per 1 m³/h of the exhaust gas is 5 kg/h or more and 600 kg/h or less.
5. The carbon dioxide utilizing system according to any one of 1 to 4,
   in which the fresh concrete sludge water is obtained by removing solid matter from the fresh concrete sludge.
6. The carbon dioxide utilizing system according to 5,
   in which a product obtained by removing the solid matter from a mixture where the solid matter and water are mixed is used as the fresh concrete sludge water.

The present invention provides the following device for producing calcium carbonate.

7. A device for producing calcium carbonate, the device including:
a flue through which exhaust gas containing carbon dioxide passes;
a spray nozzle that supplies fresh concrete sludge water to the flue; and
a dust collection device that recovers a reaction product containing calcium carbonate produced by reaction of the carbon dioxide in the exhaust gas and the fresh concrete sludge water.

In addition, the present invention provides the following method for producing calcium carbonate.

8. A method for producing calcium carbonate, the method including:
bringing exhaust gas containing carbon dioxide that passes through a flue into contact with fresh concrete sludge water that is supplied from a spray nozzle to the flue; and
allowing a dust collection device to recover a reaction product containing calcium carbonate produced by reaction of the carbon dioxide in the exhaust gas and the fresh concrete sludge water.

### Advantageous Effects of Invention

According to the present invention, while utilizing carbon dioxide in exhaust gas, the amount of waste of fresh concrete sludge typically discarded as a waste can be reduced, and calcium carbonate can be efficiently reutilized.

### Brief Description of Drawings

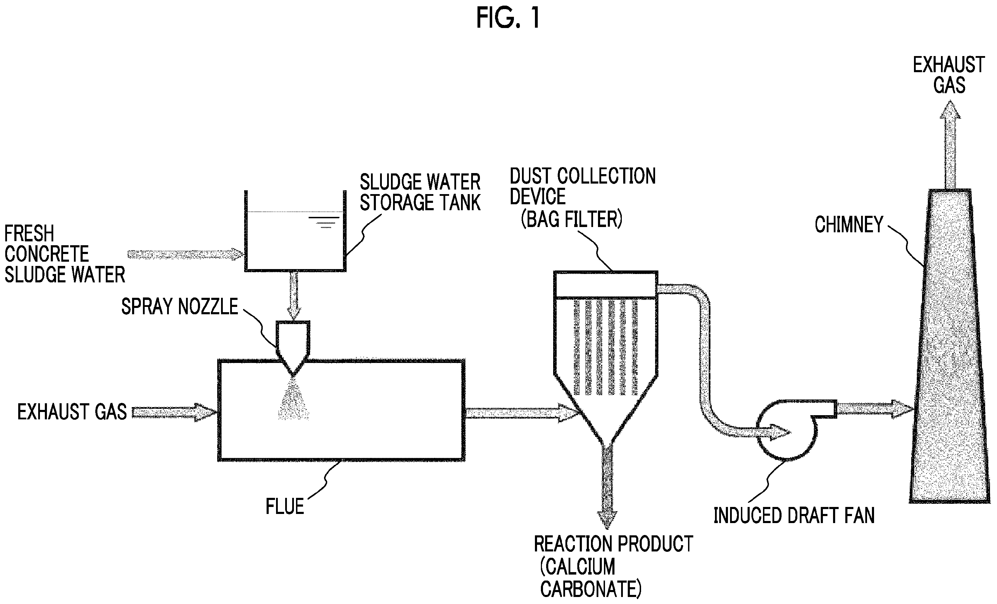

FIG. 1 is a flowchart illustrating a preferable example of a carbon dioxide utilizing system according to the present embodiment.

### Description of Embodiments

Hereinafter, an embodiment of the present invention (hereinafter, also referred to as "present embodiment") will be described. The present invention is not limited to the following embodiment, and any changes can be made within a range where the effects of the present invention do not deteriorate. The notation of a numerical range of "AA to BB" in the present specification means "AA or more and BB or less". In addition, in the present specification, numerical values regarding "or more", "or less", and "to" that relate to the description of a numerical range is any combination of numerical values. For example, when "CC to DD" and "EE to FF" in a certain numerical range are described, numerical ranges such as "CC to FF" and "EE to DD" are also included.

### [Carbon Dioxide Utilizing System]

A carbon dioxide utilizing system according to the present embodiment includes:
a flue through which exhaust gas containing carbon dioxide passes;
a spray nozzle that supplies fresh concrete sludge water to the flue; and
a dust collection device that recovers a reaction product containing calcium carbonate produced by reaction of the carbon dioxide in the exhaust gas and the fresh concrete sludge water.

As described above, various studies on a method capable of utilizing carbon dioxide (carbon dioxide gas) in exhaust gas have progressed. For example, the methods described in Patent Literatures No. 1 and 2 are disclosed.

However, the main purpose of the method of Patent Literature No. 1 is merely to remove a hydration product or the like from sludge water and to reutilize the sludge water as mixing water of concrete, and the method does not focus on production of calcium carbonate. Therefore, calcium carbonate needs to be separately dried for reutilization, and it cannot be said that the method of Patent Literature No. 1 is an efficient method when focusing on utilization of calcium carbonate.

In addition, regarding the method of Patent Literature No. 2, the alkaline aqueous solution such as a caustic soda aqueous solution needs to be used, and calcium hydroxide needs to be used to obtain calcium carbonate. Therefore, the method of Patent Literature No. 2 lacks from the viewpoints of, for example, the reutilization of a waste and the efficient reutilization of calcium carbonate.

This way, Patent Literatures No. 1 and 2 describe the utilization of carbon dioxide (carbon dioxide gas) in exhaust gas. In the methods described in Patent Literatures No. 1 and 2, it is difficult to utilize carbon dioxide (carbon dioxide gas) for reducing the amount of waste of fresh concrete sludge typically discarded as a waste, and further it is difficult to efficiently reutilize calcium carbonate.

In the carbon dioxide utilizing system according to the present embodiment, fresh concrete sludge water is supplied to and brought into contact with exhaust gas containing carbon dioxide such that a reaction of carbon dioxide and fresh concrete sludge water occurs. As a result, while utilizing carbon dioxide in exhaust gas, the amount of waste of fresh concrete sludge typically discarded as a waste can be reduced.

In addition, in the system according to the present embodiment, fresh concrete sludge water is sprayed and supplied into the exhaust gas through the spray nozzle. As a result, the fresh concrete sludge water and carbon dioxide in the exhaust gas are likely to come into contact with each other, the carbon dioxide can be efficiently incorporated into the fresh concrete sludge water, and the calcium component such as calcium hydroxide in the fresh concrete sludge water and carbon dioxide are likely to react with each other. Therefore, the production of a reaction product containing calcium carbonate is promoted. In addition, due to heat of the exhaust gas, water in the fresh concrete sludge water is converted into water vapor, the water vapor is emitted to the atmosphere as it is, and calcium carbonate is recovered in the dust collection device in a state where the calcium carbonate is dried due to the heat of the exhaust gas. Therefore, calcium carbonate can be efficiently produced and efficiently reutilized.

Thus, in the carbon dioxide utilizing system according to the present embodiment, while utilizing carbon dioxide in exhaust gas, the amount of waste of fresh concrete sludge typically discarded as a waste can be reduced, and calcium carbonate can be efficiently reutilized.

Hereinafter, the carbon dioxide utilizing system according to the present embodiment (hereinafter, also simply referred to as "system") will be described. FIG. 1 is a flowchart illustrating a preferable example of the carbon dioxide utilizing system according to the present embodiment.

The carbon dioxide utilizing system according to the present embodiment illustrated in FIG. 1 includes: a flue through which exhaust gas passes; a spray nozzle that supplies fresh concrete sludge water to the flue; and a dust collection device that recovers a reaction product containing calcium carbonate. In addition, the system illustrated in FIG. 1 includes a sludge water storage tank that stores fresh concrete sludge water and an induced draft fan and a chimney that exhaust, to the atmosphere, the exhaust gas from which the reaction product is recovered by the dust collection device.

### (Flue Through which Exhaust Gas containing Carbon Dioxide Passes)

### (Flue)

The carbon dioxide utilizing system according to the present embodiment includes the flue through which exhaust gas containing carbon dioxide passes. Typically, the flue refers to a pipe or a duct for guiding exhaust gas exhausted from boilers of various facilities to the chimney, the facilities including a power plant, a cement factory, a precast concrete (PCa) products factory, an asphalt plant, an iron mill, an incinerator, and other plant facilities.

In the system according to the present embodiment, the flue is not particularly limited as long as exhaust gas containing carbon dioxide can pass through the flue. For example, a flue may be newly provided, or in consideration of reducing facility costs, an existing flue for exhausting exhaust gas exhausted from boilers of various facilities including a power plant, a cement factory, a precast concrete (PCa) products factory, an asphalt plant, an iron mill, an incinerator, and other plant facilities may be used. In consideration that the system according to the present embodiment utilizes fresh concrete sludge water, as the flue, an existing flue that is provided for exhausting exhaust gas in a precast concrete (PCa) products factory is preferably used. Accordingly, it is preferable that the system according to the present embodiment is present in a form where the system is incorporated into the precast concrete (PCa) products factory.

### (Exhaust Gas)

Representative examples of the exhaust gas containing carbon dioxide include exhaust gas (also referred to as "combustion exhaust gas") exhausted from various plant facilities. Regarding the concentrations of carbon dioxide in the exhaust gas of these facilities, for example, the concentrations of carbon dioxide in the combustion exhaust gas from the power plant is 8 to 15% by volume, the concentrations of carbon dioxide in the combustion exhaust gas from the precast concrete (PCa) products factory, the asphalt plant, and the incinerator is typically 1 to 30% by volume, the concentrations of carbon dioxide in the combustion exhaust gas from the cement factory is typically 15 to 30% by volume, and the concentrations of carbon dioxide in the exhaust gas from the iron mill is typically 20 to 30% by volume. In the system according to the present embodiment, any of the combustion exhaust gas can be used.

Among these, in consideration of using fresh concrete sludge water, the combustion exhaust gas exhausted in a calcination step in the precast concrete (PCa) products factory is preferable.

A temperature condition of the exhaust gas cannot be uniquely determined because the temperature condition varies depending on the place from which the exhaust gas is exhausted, and the temperature in a position to which fresh concrete sludge water is supplied may be 50°C or higher and 250°C or lower. In order to remove water from the fresh concrete sludge water where the reaction product containing calcium carbonate is produced, to recover calcium carbonate in the dust collection device in a state where the calcium carbonate is dried, and to more efficiently reutilize calcium carbonate, the temperature is preferably 75°C or higher, more preferably 100°C or higher, and still more preferably 110°C or higher, and the upper limit may be 250°C or lower. When a plurality of spray nozzles are provided, the temperature condition of the exhaust gas is a temperature in a position where the concrete sludge water and the exhaust gas initially come into contact with each other, that is, a position of the spray nozzle that is provided on the most upstream side in a direction in which the exhaust gas flows in the flue.

In the system according to the present embodiment, as illustrated in FIG. 1, the spray nozzle is attached to the flue, the reaction product containing calcium carbonate is produced due to the contact between the carbon dioxide in the exhaust gas passing through the flue and the fresh concrete sludge water sprayed from the spray nozzle. The produced reaction product containing calcium carbonate passes through the flue together with the exhaust gas, and calcium carbonate in the dry state is recovered in the dust collection device.

### [Spray Nozzle that Supplies Fresh Concrete Sludge Water]

### (Fresh Concrete Sludge Water)

In a fresh concrete factory, fresh concrete sludge containing cement is produced, the cement including remaining concrete that is not shipped due to a larger amount of production compared to the order volume, concrete that is returned without being used in a supply destination, and a dissolved product thereof; and discharged water that is produced by facility cleaning of a mixer truck or the like. In the system according to the present embodiment, the fresh concrete sludge that is produced in the fresh concrete factory can be used as the fresh concrete sludge water.

The fresh concrete sludge typically contains water, the calcium component such as calcium hydroxide dissolved in water, or solid matter of the sludge (mainly containing a hydration product or fine aggregate particles). Solid matter may be removed from the fresh concrete sludge to classify the fresh concrete sludge into supernatant water containing calcium hydroxide and sludge water containing solid matter of the sludge (mainly containing a hydration product or fine aggregate particles). In this case, any of the supernatant water or the sludge water can be used as the fresh concrete sludge water.

When the fresh concrete sludge water used in the system according to the present embodiment is any of the supernatant water or the sludge water, in consideration that clogging of the spray nozzle is suppressed and the system stably operates for a longer period of time, the solid matter concentration in the fresh concrete sludge water is preferably 20% by mass or less, more preferably 10% by mass or less, still more preferably 5% by mass or less, and still more preferably 1% by mass or less.

In the fresh concrete sludge water, as described above, calcium hydroxide is dissolved and present as the calcium component. However, calcium hydroxide is also present as solid matter due to the low solubility. In addition, as the calcium component, calcium carbonate or the like is also included and is mainly present as solid matter. This way, the fresh concrete sludge water used in the system according to the present embodiment contains, as the solid matter, a calcium component such as calcium hydroxide or calcium carbonate and sludge water containing solid matter of the sludge (mainly containing a hydration product or fine aggregate particles). In the system according to the present embodiment, the solid matter in the fresh concrete sludge water and calcium carbonate that is rapidly produced by spraying the fresh concrete sludge water to the exhaust gas are present as fine particles, and these fine particles function as crystal nuclei to promote the production of calcium carbonate.

Accordingly, in the system according to the present embodiment, in order to suppress clogging of the spray nozzle and to stably operate the system for a longer period of time, it is preferable that the solid matter in the fresh concrete sludge water is as small as possible as described above. On the other hand, from the viewpoint of allowing the solid matter to function as crystal nuclei to promote the production of calcium carbonate, the solid matter concentration in the fresh concrete sludge water is preferably 0.001% by mass or more, more preferably 0.0015% by mass or more, and still more preferably 0.002% by mass or more.

In addition, from the above-described viewpoints, the particle diameter of the solid matter in the fresh concrete sludge water is preferably 1000 µm or less, more preferably 100 µm or less, still more preferably 10 µm or less, still more preferably 1 µm or less, and still more preferably 0.1 µm or less.

When the fresh concrete sludge water used in the system according to the present embodiment is the above-described supernatant water, the concentration of the calcium component in the fresh concrete sludge water is typically 100 mg/L or more, preferably 250 mg/L or more, more preferably 500 mg/L or more, and still more preferably 800 mg/L or more. The upper limit is preferably as high as possible and is not particularly limited. Typically, the upper limit is 1500 mg/L or less.

In addition, when the fresh concrete sludge water is the above-described sludge water, the concentration of the calcium component in the fresh concrete sludge water is typically 1000 mg/L or more, preferably 5000 mg/L or more, more preferably 10000 mg/L or more, and still more preferably 30000 mg/L or more. The upper limit is preferably as high as possible and is not particularly limited. Typically, the upper limit is 150000 mg/L or less.

In addition, as the fresh concrete sludge water, a product obtained by removing the solid matter from a mixture where the solid matter obtained from the fresh concrete sludge and water are mixed can also be used. The solid matter contains a calcium component such as calcium hydroxide, and the hydration product that is mainly included in the solid matter contains a calcium component such as calcium hydroxide or calcium silicate hydrate. Therefore, the product obtained by removing the solid matter from the above-described mixture contains the calcium component dissolved in water from the solid matter, and a larger amount of the calcium component can be recovered as calcium carbonate from the fresh concrete sludge.

### (Spray Nozzle)

The spray nozzle is used for supplying the fresh concrete sludge water to the flue. The fresh concrete sludge water is supplied to the flue while being sprayed thereto through the spray nozzle, that is, is supplied to the flue in the form of particles. Therefore, as described above, the fresh concrete sludge water and carbon dioxide in the exhaust gas are likely to come into contact with each other, the carbon dioxide can be efficiently incorporated into the fresh concrete sludge water, and calcium carbonate is likely to be produced by reaction of the calcium component and the carbon dioxide. Further, by efficiently evaporating water, calcium carbonate in a dry state can be obtained without including a drying step.

The spray nozzle is not particularly limited as long as the spray nozzle is a nozzle that can spray the fresh concrete sludge water, and a nozzle that is commercially available as a spray nozzle can be used. For example, a single-fluid nozzle that sprays only the fresh concrete sludge water or a multi-fluid nozzle such as a two-fluid nozzle that sprays the fresh concrete sludge water optionally together with gas such as air can be used. Further, optionally, a nozzle (also referred to as "ultrasonic spray nozzle") including a mechanism that generates ultrasonic waves to pulverize the sprayed particles.

A spray pattern of the spray nozzle can be adopted without any particular limitation, and representative examples thereof include a full-cone, a hollow-cone, a flat shape, and a solid shape. In addition, a spray angle of the spray nozzle can be adopted without any particular limitation, and is preferably 60° or higher and more preferably 90° or higher, and the upper limit thereof is preferably 145° or less and more preferably 140° or less.

In the system according to the present embodiment, from the viewpoints of ensuring a more favorable sprayed state to promote the reaction caused by the contact between the carbon dioxide in the exhaust gas and the calcium component in the fresh concrete sludge water, a spray nozzle having a spray pattern having a hollow-cone or a flat shape where the spray angle is large is preferably used as the spray nozzle.

A hole diameter of spray holes of the fresh concrete sludge water in the spray nozzle cannot be uniquely determined because the hole diameter changes depending on the number of spray holes in the spray nozzle and the amount of the fresh concrete sludge water supplied, and the like. From the viewpoint of ensuring a more favorable sprayed state, the hole diameter is preferably 0.1 mm or more, more preferably 0.3 mm or more, and still more preferably 0.5 mm or more, and the upper limit thereof is preferably 5.0 mm or less, more preferably 4.0 mm or less, and still more preferably 3.0 mm or less.

In the system according to the present embodiment, the number of spray nozzles provided cannot be uniquely determined as long as the number of spray nozzles provided changes depending on the size of the spray nozzle, the hole diameter and the number of the spray holes in the spray nozzle, the amount of the fresh concrete sludge water supplied, and the like. The number of spray nozzles provided may be 1 or more, and the upper limit thereof is typically 10 or less, preferably 8 or less, and more preferably 5 or less.

The position where the spray nozzle is provided is not particularly limited as long as the fresh concrete sludge water can be supplied to the flue. As illustrated in FIG. 1, it is preferable that the spray nozzle is directly provided in the flue. In this case, when a cross-section of the position where the spray nozzle is provided taken in a direction perpendicular to the flue is circular, the spray nozzle is provided preferably on the circumference of the upper half of the circle (within ±90° with respect to the uppermost point as 0°), more preferably within ±60°, still more preferably within ±30°, still more preferably within ±15°, and still more preferably on the uppermost point. In addition, when the flue is an angular duct, the position where the spray nozzle is provided is determined according to the case of the above-described circular pipe (or duct) .

When a plurality of spray nozzles are provided, the plurality of spray nozzles may be provided on the circle of the same cross-section, for example, may be sequentially provided on the uppermost point in a direction in which the exhaust gas flows.

From the viewpoint of promoting the reaction caused by the contact between the carbon dioxide in the exhaust gas and the calcium component in the fresh concrete sludge water, it is preferable that the sprayed particles of the fresh concrete sludge water that is sprayed by the spray nozzle are as small as possible. The particle diameter of the sprayed particles is preferably 200 µm or less, more preferably 120 µm or less, still more preferably 80 µm or less, and still more preferably 50 µm or less.

The amount of the fresh concrete sludge water supplied to the fresh concrete sludge water cannot be uniquely determined because the amount changes depending on the flow rate at which the exhaust gas passes through the flue, the size of the flue, and the like. The amount of the fresh concrete sludge water supplied per 1 m³/h of the exhaust gas is 5 kg/h or more and 600 kg/h or less. From the viewpoint of more efficiently promoting the production of the reaction product containing calcium carbonate, the amount of the fresh concrete sludge water supplied is preferably 10 kg/h or more, more preferably 20 kg/h or more, and still more preferably 100 kg/h or more, and the upper limit may be 500 kg/h or less. When a plurality of spray nozzles are provided, the amount of the fresh concrete sludge water supplied may be the amount thereof supplied from all of the spray nozzles.

### (Sludge Water Storage Tank)

In consideration of the stability of the operation of the system according to the present embodiment, it is preferable that the fresh concrete sludge water is supplied to the flue through the spray nozzle while being temporarily stored in the tank. That is, it is preferable that the system according to the present embodiment includes the sludge water storage tank that stores the fresh concrete sludge water.

The sludge water storage tank temporarily stores the fresh concrete sludge water such that a necessary amount of variation is likely to be handled and a given amount of the fresh concrete sludge water is likely to be sprayed from the spray nozzle. By stabilizing the contact between the exhaust gas in the flue and the fresh concrete sludge water, the production of calcium carbonate is stabilized by reaction of the carbon dioxide and the calcium component. As a result, calcium carbonate can be efficiently reutilized. In addition, when the operation of the system is stopped, the fresh concrete sludge water can be stored until the next operation, and thus the system can be operated more rapidly.

The sludge water storage tank can be adopted without any particular limitation as long as the sludge water storage tank can store the sludge water. For example, the sludge water storage tank may be provided below or above the ground, for example, as in an aboveground storage tank or an underground storage tank, and may be selected from various roof type storage tanks called a fixed roof type and a floating roof type and a horizontal tank and a vertical tank such as a horizontal cylinder and a vertical cylinder.

In addition, the sludge water storage tank may be newly provided, or an existing tank may be used as it is**.**

It is preferable that the sludge water storage tank includes a stirrer. By including the stirrer, when the fresh concrete sludge water contains the solid matter, the coagulation of the solid matter can be suppressed.

In addition, when the sludge water storage tank may include various instruments such as a level meter or a control valve for controlling the amount of the fresh concrete sludge water supplied to the sludge water storage tank by the level meter.

### (Chimney)

It is preferable that the carbon dioxide utilizing system according to the present embodiment includes the chimney. By including the chimney, the exhaust gas can be more rapidly exhausted due to the chimney effect. In addition, even if the induced draft fan is provided, the power required for the induced draft fan can be reduced.

The chimney can be adopted without any particular limitation as long as the chimney has a structure capable of exhausting the exhaust gas to the atmosphere. For example, a single chimney or a double chimney such as a heat-insulated double chimney or a hollow double chimney can be adopted. When the system according to the present embodiment is provided outdoors, from the viewpoint of suppressing a decrease in the temperature of the exhaust gas and more stably performing the exhaust, it is preferable that the double chimney is adopted.

The chimney may be newly provided for the system according to the present embodiment, or an existing chimney may be used as in an existing flue. In consideration that the system according to the present embodiment utilizes fresh concrete sludge water, an existing chimney that is provided for exhausting exhaust gas in a fresh concrete factory to the atmosphere is preferably used as the chimney.

[Dust Collection Device that Recovers Reaction Product] The carbon dioxide utilizing system according to the present embodiment includes the dust collection device that recovers the reaction product containing calcium carbonate produced in the above-described flue. As described above, the exhaust gas passes through the dust collection device together with calcium carbonate produced in the flue such that the calcium carbonate passing through the dust collection device together is recovered, and the recovered calcium carbonate is reutilized. In addition, the exhaust gas from which the calcium carbonate is recovered is emitted to the atmosphere.

### (Dust Collection Device)

As the dust collection device, various dust collection devices including an electric dust collection device such as a dry electric dust collection device or a wet electric dust collection device and a filter dust collection device (bag filter) can be used. In the system according to the present embodiment, a filter dust collection device (bag filter) is preferable in consideration of a reduction in electricity consumption, easy handling, and the like.

A filter used for the filter dust collection device (bag filter) can be used without any particular limitation, and examples thereof include filters formed of materials such as polypropylene, nylon, acryl, polyester, cotton, wool, heat-resistant nylon, glass fibers, or PTFE (polytetrafluoroethylene). In addition, a functional filter such as an electrostatic filter can also be used.

The bag filter may have dislodgement means, and preferable examples thereof include pulsating back pressure-type means and pulse jet-type means. In particular, pulse jet-type means is preferable.

### (Reaction product Containing Calcium Carbonate)

In the carbon dioxide utilizing system according to the present embodiment, the reaction product containing calcium carbonate is recovered in the dust collection device. The reaction product containing calcium carbonate mainly contains calcium carbonate produced by reaction of the carbon dioxide in the exhaust gas and the calcium component in the fresh concrete sludge water.

The concentration of calcium carbonate in the reaction product containing calcium carbonate is typically 90% by mass or more, 92% by mass or more, or 95% by mass or more. This way, in the reaction product containing calcium carbonate obtained by the system according to the present embodiment, the concentration of calcium carbonate is very high.

The reaction product containing calcium carbonate recovered by the system according to the present embodiment can be suitably utilized for applications such as a filler or a building material used for a cement composition, mortar, concrete, or asphalt.

The calcium carbonate produced in the carbon dioxide utilizing system according to the present embodiment can also be used alone or as a mixture with a filler such as another calcium carbonate. In addition, when the calcium carbonate is used for the above-described applications, the calcium carbonate is mass-balance certified, which can contribute to carbon neutrality according to the usage of calcium carbonate obtained by the carbon dioxide utilizing system according to the present embodiment.

The fresh concrete sludge water contains sodium, sulfur, and the like. Therefore, the reaction product containing calcium carbonate may also contain impurities derived from sodium, sulfur, and the like. The content of the impurities in the reaction product containing calcium carbonate is typically about 10% by mass or less, 8% by mass or less, 5% by mass or less, 3% by mass or less, or 1% by mass or less. This way, the content of the impurities is small, and thus there are also no problems for the use in the above-described applications.

### (Induced Draft Fan)

In the system according to the present embodiment, as illustrated in FIG. 1, an induced draft fan may be provided in a line downstream of an exhaust port of the bag filter to forcibly exhaust air from the exhaust port. By exhausting the air using the induced draft fan or the like, the filtration through the bag filter can be made to smoothly progress, and a stable fluidized bed of medium particles in a fluidized bed dryer can be obtained. Therefore, the reaction product containing calcium carbonate can be recovered within a shorter period of time.

### [Device for Producing Calcium Carbonate]

A device for producing calcium carbonate according to the present embodiment includes:
a flue through which exhaust gas containing carbon dioxide passes;
a spray nozzle that supplies fresh concrete sludge water to the flue; and
a dust collection device that recovers a reaction product containing calcium carbonate produced by reaction of the carbon dioxide in the exhaust gas and the fresh concrete sludge water.

In the device for producing calcium carbonate according to the present embodiment, the exhaust gas containing carbon dioxide and the fresh concrete sludge water can be utilized. Therefore, while utilizing carbon dioxide in exhaust gas, the amount of waste of fresh concrete sludge typically discarded as a waste can be reduced. In addition, the concrete sludge water is sprayed and supplied into the exhaust gas through the spray nozzle. As a result, the fresh concrete sludge water and carbon dioxide are likely to come into contact with each other, the carbon dioxide can be efficiently incorporated into the fresh concrete sludge water, and a calcium component such as calcium hydroxide and the carbon dioxide are likely to react with each other. Further, water in the fresh concrete sludge water is removed as water vapor due to the heat of the exhaust gas, and calcium carbonate can be obtained as powder and thus can be easily recovered in the dust collection device. Therefore, calcium carbonate can be efficiently produced and can be efficiently reutilized.

The exhaust gas containing carbon dioxide, the flue, the fresh concrete sludge water, the spray nozzle, and the reaction product containing calcium carbonate produced by reaction of the carbon dioxide and the fresh concrete sludge water, and the dust collection device are the same as described above in the carbon dioxide utilizing system.

The calcium carbonate obtained by the device for producing calcium carbonate according to the present embodiment can be suitably utilized for applications such as a filler or a building material used for a cement composition, mortar, concrete, or asphalt. In addition, when the calcium carbonate is used for the above-described applications, the calcium carbonate is mass-balance certified, which can contribute to carbon neutrality according to the usage of calcium carbonate obtained by the carbon dioxide utilizing system according to the present embodiment.

### [Method for Producing Calcium Carbonate]

A method for producing calcium carbonate according to the present embodiment includes:
bringing exhaust gas containing carbon dioxide that passes through a flue into contact with fresh concrete sludge water that is supplied from a spray nozzle to the flue; and
allowing a dust collection device to recover a reaction product containing calcium carbonate produced by reaction of the carbon dioxide in the exhaust gas and the fresh concrete sludge water.

In the method for producing calcium carbonate according to the present embodiment, the exhaust gas containing carbon dioxide and the fresh concrete sludge water can be utilized. Therefore, while utilizing carbon dioxide in exhaust gas, the amount of waste of fresh concrete sludge typically discarded as a waste can be reduced. In addition, the concrete sludge water is sprayed and supplied into the exhaust gas through the spray nozzle. As a result, the fresh concrete sludge water and carbon dioxide are likely to come into contact with each other, the carbon dioxide can be efficiently incorporated into the fresh concrete sludge water, and a calcium component such as calcium hydroxide and the carbon dioxide are likely to react with each other. Further, water in the fresh concrete sludge water is removed as water vapor due to the heat of the exhaust gas, and calcium carbonate can be obtained as powder and thus can be easily recovered in the dust collection device. Therefore, calcium carbonate can be efficiently produced and can be efficiently reutilized.

The exhaust gas containing carbon dioxide, the flue, the fresh concrete sludge water, the spray nozzle, and the reaction product containing calcium carbonate produced by reaction of the carbon dioxide and the fresh concrete sludge water, and the dust collection device are the same as described above in the carbon dioxide utilizing system.

In addition, various conditions including the amount of the fresh concrete sludge water supplied and the temperature of the exhaust gas are also the same as described above in the carbon dioxide utilizing system.

The calcium carbonate obtained by the method for producing calcium carbonate according to the present embodiment can be suitably utilized for applications such as a filler or a building material used for a cement composition, mortar, concrete, or asphalt. In addition, when the calcium carbonate is used for the above-described applications, the calcium carbonate is mass-balance certified, which can contribute to carbon neutrality according to the usage of calcium carbonate obtained by the carbon dioxide utilizing system according to the present embodiment.

### Examples

Hereinafter, the present invention will be described in detail using Examples, but is not limited to the following Examples.

A device for producing calcium carbonate having the configuration illustrated in FIG. 1 was used.

While being sprayed at a flow rate of 88 g/min (5.3 kg/h), fresh concrete sludge water (calcium concentration: 900 mg/L, solid matter concentration: 0.0022% by mass, solid matter particle diameter: 1 to 10 µm) was supplied (sprayed particle diameter: 10 to 50 µm) from a nozzle (nozzle hole diameter: 0.5 mmφ) to a flue (diameter: 100 mm) through which exhaust gas (carbon dioxide concentration: 26% by volume, temperature: 60°C) in a concrete PCa products factory passed at 4 L/min (0.24 m³/h) . When powder recovered by the dust collection device (bag filter) was analyzed, the powder was verified as powder of calcium carbonate (purity: 96%).

## Claims

1. A carbon dioxide utilizing system comprising:
a flue through which exhaust gas containing carbon dioxide passes;
a spray nozzle that supplies fresh concrete sludge water to the flue; and
a dust collection device that recovers a reaction product containing calcium carbonate produced by reaction of the carbon dioxide in the exhaust gas and the fresh concrete sludge water.

2. The carbon dioxide utilizing system according to claim 1,
wherein a temperature of the exhaust gas is 50°C or higher and 250°C or lower.

3. The carbon dioxide utilizing system according to claim 1 or 2,
wherein the dust collection device is a bag filter.

4. The carbon dioxide utilizing system according to claim 1 or 2,
wherein an amount of the fresh concrete sludge water supplied per 1 m³/h of the exhaust gas is 5 kg/h or more and 600 kg/h or less.

5. The carbon dioxide utilizing system according to claim 1 or 2,
wherein the fresh concrete sludge water is obtained by removing solid matter from the fresh concrete sludge.

6. The carbon dioxide utilizing system according to claim 5,
wherein a product obtained by removing the solid matter from a mixture where the solid matter and water are mixed is used as the fresh concrete sludge water.

7. A device for producing calcium carbonate, the device comprising:
a flue through which exhaust gas containing carbon dioxide passes;
a spray nozzle that supplies fresh concrete sludge water to the flue; and
a dust collection device that recovers a reaction product containing calcium carbonate produced by reaction of the carbon dioxide in the exhaust gas and the fresh concrete sludge water.

8. A method for producing calcium carbonate, the method comprising:
bringing exhaust gas containing carbon dioxide that passes through a flue into contact with fresh concrete sludge water that is supplied from a spray nozzle to the flue; and
allowing a dust collection device to recover a reaction product containing calcium carbonate produced by reaction of the carbon dioxide in the exhaust gas and the fresh concrete sludge water.
